# EUROPEAN PATENT APPLICATION

(11) **EP 4 832 386 A1**
(43) Date of publication of application: **28.10.2026**
(21) Application number: 26157637.5
(22) Date of filing: 10.02.2026
(51) Int. Cl.: H04L 1/00, H04W 24/08, H04W 24/10

(54) **BALANCING WIRELESS SENSING AND COMMUNICATION**

(30) Priority: 21.04.2025 US 202519185183
(71) Applicant: TP-Link Systems Inc., Irvine, California 92618 (US)
(72) Inventor: Li, Haozheng, Shanghai, 201799 (CN)
(74) Representative: Marks & Clerk LLP

(57) **Abstract**

An AP device including one or more processors; a memory coupled to at least one of the one or more processors; and a set of computer program instructions stored in the memory, which, when executed by at least one of the one or more processors, cause the AP device to perform operations of: determining a first number of CSI samples obtained during a first time period before a check time point; estimating a second number of CSI samples to be obtained during a second time period after the check time point; and determining, in response to a sum of the first and second numbers not meeting a requirement for a wireless sensing task, one or more additional sensing frames to be communicated between the AP device and the client device.

## Description

### CROSS-REFERENCE TO RELATED APPLICATION(S)

This application claims the benefit of U.S. Non-Provisional Patent Application No. 19/185,183, filed on April 21, 2025 and titled "BALANCING WIRELESS SENSING AND COMMUNICATION". The entire disclosure of the aforementioned application is incorporated by reference as part of the disclosure of this application.

### TECHNICAL FIELD

The present disclosure relates to wireless communication, and in particular, to access point (AP) devices, methods, and computer program products for facilitating wireless sensing in a wireless network.

### BACKGROUND

Wireless sensing, also known as wireless local area network (WLAN) sensing, is a technology that uses wireless fidelity (Wi-Fi) signals to perform sensing tasks, by exploiting prevalent Wi-Fi infrastructures and ubiquitous Wi-Fi signals over surrounding environments. In particular, Wi-Fi radio waves can bounce, penetrate, and bend on the surface of objects during their propagation. By proper signal processing, the received Wi-Fi signals can be harnessed to sense surrounding environments, detect obstructions, and interpret target movement. Thus, WLAN sensing has been successfully used in abundant residential, enterprise, indoor, and outdoor applications, including gesture control, fall detection, tracking, imaging, activity recognition, vital signs monitoring, etc.

The current WLAN sensing technologies utilize sensing-dedicated Wi-Fi signals to obtain channel measurement information; however, these sensing-dedicated Wi-Fi signals are additional from the perspective of communication tasks and would occupy air interface overhead and other network resources, affecting communication performance within the network. Therefore, there is a need for enhancement on wireless sensing.

### SUMMARY

In view of the above problems, the present disclosure provides access point (AP) devices, methods, and computer program products for facilitating wireless sensing in a wireless network.

In accordance with one embodiment of the present disclosure, there is provided an access point (AP) device. The AP device may comprise one or more processors; a memory coupled to at least one of the one or more processors; and a set of computer program instructions stored in the memory. When executed by at least one of the one or more processors, the set of computer program instructions may cause the AP device to perform the following operations: determining a first number of channel state information (CSI) samples obtained during a first time period before a check time point; estimating a second number of CSI samples to be obtained during a second time period after the check time point; and determining, in response to a sum of the first and second numbers of CSI samples not meeting a requirement for a wireless sensing task, one or more additional sensing frames to be communicated between the AP device and the client device.

In accordance with another embodiment of the present disclosure, there is provided a method for wireless communication implemented at an access point (AP) device. The method may comprise determining a first number of channel state information (CSI) samples obtained during a first time period before a check time point; estimating a second number of CSI samples to be obtained during a second time period after the check time point; and determining, in response to a sum of the first and second numbers of CSI samples not meeting a requirement for a wireless sensing task, one or more additional sensing frames to be communicated between the AP device and the client device.

In accordance with a further embodiment of the present disclosure, there is provided an access point (AP) device. The AP device may comprise one or more processors; a memory coupled to at least one of the one or more processors; and a set of computer program instructions stored in the memory. When executed by at least one of the one or more processors, the set of computer program instructions may cause the AP device to perform the following operations: determining, in response to a duration from obtaining a last CSI sample being larger than a gap threshold, an additional sensing frame to be communicated between the AP device and the client device; and obtaining a CSI sample of the additional sensing frame.

In accordance with yet another embodiment of the present disclosure, there is provided a method for wireless communication implemented at an access point (AP) device. The method may comprise determining, in response to a duration from obtaining a last CSI sample being larger than a gap threshold, an additional sensing frame to be communicated between the AP device and the client device; and obtaining a CSI sample of the additional sensing frame.

In accordance with still another embodiment of the present disclosure, there is provided a computer program product for wireless communication. The computer program product may comprise a non-transitory computer readable storage medium having program instructions embodied therewith. The program instructions are executable by a processor of an access point (AP) device, to cause the AP device to determine a first number of channel state information (CSI) samples obtained during a first time period before a check time point; estimate a second number of CSI samples to be obtained during a second time period after the check time point; and determine, in response to a sum of the first and second numbers of CSI samples not meeting a requirement for a wireless sensing task, one or more additional sensing frames to be communicated between the AP device and the client device.

In accordance with a yet further embodiment of the present disclosure, there is provided a computer program product for wireless communication. The computer program product may comprise a non-transitory computer readable storage medium having program instructions embodied therewith. The program instructions are executable by a processor of an access point (AP) device to cause the AP device to determine, in response to a duration from obtaining a last CSI sample being larger than a gap threshold, an additional sensing frame to be communicated between the AP device and the client device; and obtain a CSI sample of the additional sensing frame.

In accordance with the embodiments of the present disclosure, an enhanced wireless sensing mechanism can be realized by means of adding sensing frames.

### BRIEF DESCRIPTION OF THE DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps, or elements.
FIG. 1 illustrates an exemplary architecture 100 of a wireless communication system in accordance with an embodiment of the present disclosure;
FIG. 2 illustrates a schematic diagram of a High Efficiency (HE) Single User (SU) Physical Protocol Data Unit (PPDU) frame format in accordance with an embodiment of the present disclosure;
FIG. 3 illustrates a schematic diagram of a High Efficiency (HE) null data packet (NDP) frame format in accordance with an embodiment of the present disclosure;
FIG. 4 shows an exemplary schematic diagram illustrating a CSI acquisition process 400 in accordance with an embodiment of the present disclosure;
FIG. 5 shows an exemplary schematic diagram illustrating an enhanced wireless sensing 500 in accordance with an embodiment of the present disclosure;
FIG. 6 shows an exemplary schematic diagram illustrating a further enhanced wireless sensing process 600 in accordance with an embodiment of the present disclosure;
FIG. 7 shows a flowchart of a computer-implemented method 700 for wireless communication implemented at an access point (AP) device in accordance with an embodiment of the present disclosure;
FIG. 8 shows a flowchart of a computer-implemented method 800 for wireless communication implemented at an access point (AP) device in accordance with another embodiment of the present disclosure;
FIG. 9 is an exemplary block diagram illustrating a computing device in accordance with some embodiments of the present disclosure.

One skilled in the art will appreciate that elements in the figures are illustrated for simplicity and clarity and have not necessarily been depicted to scale. For example, the dimensions of some of the elements in the illustrations, block diagrams or flowcharts may be exaggerated in respect to other elements to help an accurate understanding of the present embodiments.

### DETAILED DESCRIPTION

The following detailed description refers to the accompanying drawings. While several illustrative embodiments are described herein, modifications, adaptations and other implementations are possible. For example, substitutions, additions, or modifications may be made to the components and steps illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope of the invention is defined by the appended claims.

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "receiving", "transmitting", "determining", "estimating", "adding", "obtaining", "communicating", "computing", "enabling", "sensing" or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner. Likewise, articles such as "a", "an" or "the" do not represent a quantity limit, but represent an existence of at least one. Words such as "connect" and "link" are not limited to physical or mechanical connections, but may include electrical connections, whether direct or indirect.

In addition, technical features involved in different embodiments of the present disclosure described below may be combined with each other as long as no conflicts occurs therebetween.

In the present disclosure, an AP, which may be interchangeably referred to as a wireless access point (WAP), is a communication device that can communicate with a non-AP device (e.g., a station (STA) or client device) in a WLAN and that allows the non-AP to connect to a wired network. The AP usually connects to a router (via a wired network) as a standalone device, but it can also be integrated with or employed in the router. Likewise, in the present disclosure, a non-AP (e.g., a client device or station, which is interchangeably referred to as a STA) is a communication device that can communicate with an AP to obtain various communication services such as voice, video, packet data, messaging, broadcast, etc. The STA can be any device that contains an IEEE 820.11-conformant media access control (MAC) and physical layer (PHY) interface to the wireless medium (WM). For example, a STA may be a laptop, a desktop personal computer (PC), a personal digital assistant (PDA), an access point or a Wi-Fi phone in a WLAN environment. The STA may be fixed or mobile. In the WLAN environment, the terms "STA", "client device", "wireless client", "user" and "user device" are often used interchangeably.

In the present disclosure, a STA in a WLAN may work as an AP at a different occasion, and vice versa. This is because communication devices in the context of IEEE 820.11 (Wi-Fi) technologies may include both STA hardware components and AP hardware components. In this manner, the communication devices may switch between a STA mode and an AP mode, based on actual WLAN conditions and/or requirements. In various embodiments below, a non-AP STA may refer to a STA in a WLAN that is not implemented as an AP.

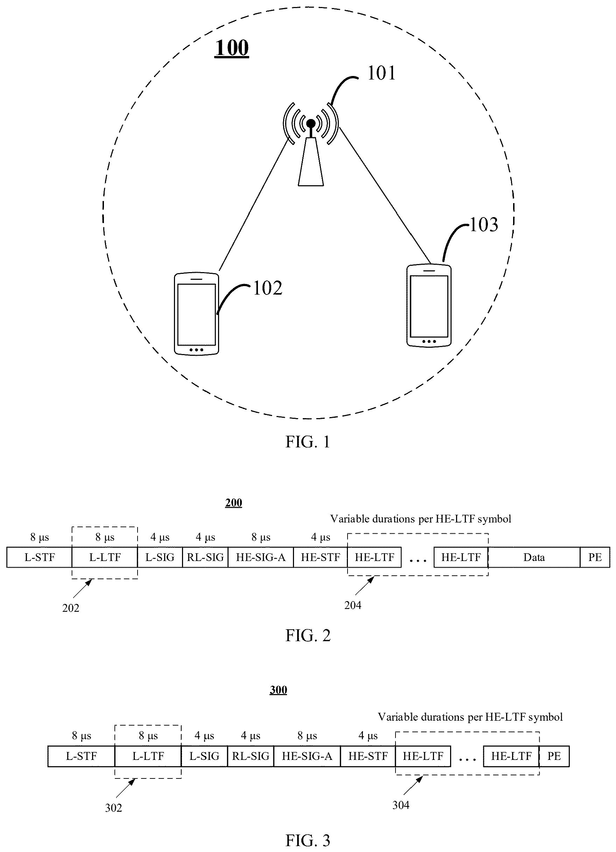

FIG. 1 illustrates an exemplary architecture 100 of a wireless communication system according to an embodiment of the present disclosure. As shown in FIG. 1, the wireless communication system includes an AP device 101 and multiple client devices (for example, client devices 102 and 103 as shown in FIG. 1), and can be employed in IEEE 802.11 WLAN networks. The AP device is a device that provides a service for the client device, and the client device may communicate with the AP device. The quantity of AP devices and the quantity of client devices in FIG. 1 are merely an example.

As previously discussed, the AP is capable of establishing WLAN communication with the client device enabling the client devices to connect to a wired network. This permits the client device to access a variety of communication services from the Internet, including voice, video, packet data, messaging, and broadcast, among others. The client device in embodiments of the present disclosure has a wireless transceiver function, may support the 802.11 series protocols, and may communicate with the AP device or another client device. After the client device 103 successfully associates with the AP through the 802.11 association procedure, data transfer between the client device 103 and the AP can commence. This allows the client device 103 to transmit and receive data packets to and from the network through the AP. The client device is any user communication device that allows a user to communicate with an AP and then communicate with a WLAN. For example, the client device may be user equipment that can be connected to a network, including but not limited to, for example, a smartphone, a tablet computer, a desktop computer, a laptop computer, a notebook computer, an ultra-mobile personal computer, a handheld computer, a netbook, a personal digital assistant, and other internet-capable devices, may be an internet of things node in the internet of things, or may be a vehicle-mounted communication apparatus in the internet of vehicles. The AP device in embodiments of this application is an apparatus that serves the client device, and may support the 802.11 series protocols. For example, the AP device may be a communication entity such as a communication server, a router, a switch, or a bridge, or the AP device may include various forms of macro base stations, micro base stations, relay stations, and the like. Certainly, the AP device may alternatively be chips and processing systems in the various forms of devices, to implement the method and the function in embodiments of the present disclosure. Herein, the term "packet" may refer to "frame" and the like.

The architecture presented in FIG. 1 is only illustrative and does not impose any limitations on any embodiment of the present disclosure. An AP in the WLAN network can serve specific sets of associated client devices, and depending on application requirements and overall network constraints, the number of client devices in each serving set can be more than two client devices as depicted.

In general, the WLAN sensing can be classified into two main categories, which are implemented based on different wireless signal characteristics, namely the received signal strength indicator (RSSI) and channel state information (CSI), respectively. As compared with RSSI, CSI is able to provide finer-grained wireless channel information at the physical layer, which is thus considered as an alternative solution for accurate sensing. CSI contains both channel amplitude and phase information over different subcarriers that provide the capability to discriminate multi-path characteristics. For instance, by processing the spatial-domain, frequencydomain, and time-domain CSI at multiple antennas, subcarriers, and time samples via fast Fourier transform (FFT), detailed multi-path parameters such as angle-of-arrival (AoA), time-of-flight (ToF), and doppler frequency shift (DFS), can be extracted.

Multiple-input multiple-output (MIMO) channel measurement takes place in every PPDU as a result of transmitting long training fields (LTFs) as part of the PHY preamble. FIG. 2 illustrates a schematic diagram of a High Efficiency (HE) Single User (SU) Physical Protocol Data Unit (PPDU) frame format in accordance with an embodiment of the present disclosure. Referring to FIG. 2, L-LTF field 202 and HE-LTF fields 204 of HE-SU PPDU frame format 200 may be used for channel measurement. It should be noted that the format of a PPDU and transmission parameters may change based on channel conditions, neighboring channel interference etc. In IEEE 802.11ax standards, there are four different types of HE PPDU formats, for example HE-SU PPDU, HE-Multiuser (HE-MU) PPDU, HE Extended Range Single User (HE ER SU) PPDU and HE Trigger-Based (HE-TB) PPDU, where a variant of the HE SU PPDU is HE sounding null data packet (NDP) and a variant of the HE TB PPDU is HE TB feedback NDP. All of these HE PPDU formats include HE-LTF fields, which may be used for channel measurement.

FIG. 3 illustrates a schematic diagram of a High Efficiency (HE) null data packet (NDP) frame format in accordance with an embodiment of the present disclosure. It can be seen that the HE-NDP frame format 300 also includes L-LTF field 302 and HE-LTF fields 304, which may be used for channel measurement. In typical Wi-Fi sensing technology implementations, in order to acquire CSI in a fully controllable manner, sensing-oriented packets, known as sensing PPDUs (hereinafter referred to as s-PPDUs) or sensing frames, are transmitted for the purpose of sensing instead of communication. For example, CSI may be obtained by extracting LTF fields from a HE-NDP, which can be deemed as a s-PPDU. However, as mentioned above, sensing-oriented packets are additional from the perspective of communication tasks and would occupy air interface overhead and other network resources, affecting communication performance within the network. On the other hand, the number of communication-oriented packets would vary according to the requirement of communication but may not be met the requirement of sensing.

In fact, in actual Wi-Fi applications, wireless communication is the core requirement of the network. Consequently, communication-oriented packets, known as communication PPDUs (hereinafter referred to as c-PPDUs), are prevalent and are exchanged among devices. Similarly, receiving devices can extract LTF fields from the c-PPDUs to estimate the channel, obtain CSI, and subsequently utilize it to achieve Wi-Fi sensing functionalities. Hence, both s-PPDUs and c-PPDUs can be utilized to obtain CSI, and have no fundamentally different in their capacities to serve as a data source for Wi-Fi sensing. Therefore, in the context of Wi-Fi networks where c-PPDUs are inherently present, it is possible to fully exploit c-PPDUs for CSI acquisition and supplement with s-PPDUs as needed based on the demand for CSI data. This strategy ensures that the requirements for both communication and sensing are met while minimizing the introduction of additional s-PPDUs into the network, thereby reducing network overhead and improving network performance.

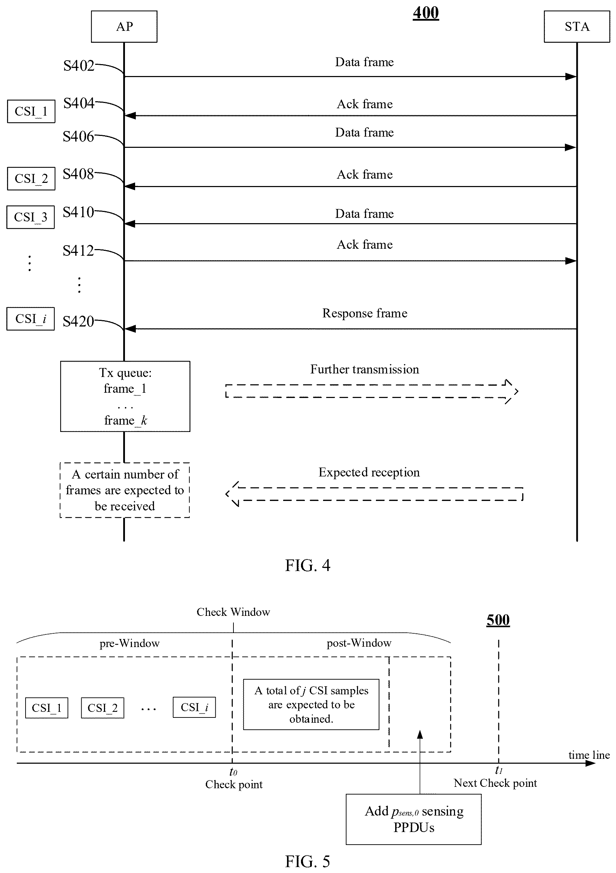

FIG. 4 shows an exemplary schematic diagram illustrating a CSI acquisition process in accordance with an embodiment of the present disclosure. As shown in FIG. 4, the AP device (for example, the AP device 101 in FIG. 1) has been associated with a STA device (for example, the STA device 102 or 104 in FIG. 1), and it performs Wi-Fi sensing functionalities. Specifically, the AP device locally utilizes LTF fields of the c-PPDU for channel estimation and collects CSI data, with each CSI data carrying a channel information sample at the moment of transmitting this packet.

At S402, the AP device transmits a downlink (DL) data frame to the STA device, and then receives from the STA device an uplink (UL) acknowledge frame (ack frame), at S404. The AP device may compute CSI data CSI_1 from the UL ack frame. Similarly, the AP device may compute CSI data CSI_2 from the UL ack frame received at S408, which is a feedback to the DL data frame transmitted at S406. Moreover, the AP device receives an UL data frame from the STA device at S410, and computes CSI data CSI_3 from the UL data frame. During the continuous exchange of packets, the AP device obtains a number of CSI data, until obtaining CSI data CSI_*i* from the UL response frame sent by the STA device at S420. At this moment, the AP device, with k frames of different types pending in its transmission queue to the STA device, may estimate the quantity of frames it will receive from the STA device in the subsequent period by considering the quantity and types of frames to be transmitted to the STA device, the current communication quality, and the STA device's UL transmission requirements. It should be noted that the quantity of the DL frames to be transmitted to the STA device may be not equal to the quantity of the UL frames to be received from the STA device. This is because that the STA device would transmit a UL frame as feedback of multiple DL frames with the type of small size.

FIG. 5 shows an exemplary schematic diagram illustrating an enhanced wireless sensing 500 in accordance with an embodiment of the present disclosure.

As shown in FIG. 5, when arriving a check time point for checking CSI quantity, the AP device may check whether it is required to add one or more s-PPDUs so as to meet the requirements of the current Wi-Fi sensing functionalities. In the embodiment of FIG. 5, the current check time point is *t*₀, the previous checking period prior to the current check time point *t*₀ is *Δtₚᵣₑ,* and the post checking period subsequent to the current check time point *t*₀ is *Δtₚₒₛₜ*; therefore, the total checking period *Δtₜₒₜₐₗ* could be calculated according equation (1) as follows:
${Δt}_{total} = {Δt}_{pre} + {Δt}_{post}$ (1).

In some embodiments, the previous checking period *Δtₚᵣₑ* and the post checking period *Δtₚₒₛₜ* may have the same size, so that the checking time point is at the middle and thus the obtained CSI data is substantially regularity.

Under the requirements of the current Wi-Fi sensing task, the required quantity of CSI samples is *p*₀ per second. The AP device may count the number of CSI samples obtained within the previous checking window (*t*₀ *- Δtₚᵣₑ, t*₀], which is recorded as *pₚᵣₑ,* and *pₚᵣₑ* = *i* in this embodiment. Furthermore, according to the number (which equals to *k* in this embodiment) and types of frames in a queue to be transmitted from the AP device to the client device during the post checking window in conjunction with the current network condition, the AP device may estimate the number of CSI samples to be obtained within the post checking window (*t*₀, *t*₀ *+ Δtₚₒₛₜ*], which is recorded as *pₚₒₛₜ* , and *pₚₒₛₜ = j* in this embodiment. In some embodiments, the CSI samples obtained within the previous checking window may be computed from communication-oriented frames and/or sensing-oriented frames. In some embodiments, the CSI samples obtained within the post checking window may be computed from communication-oriented frames. These embodiments fully utilize the information from communication-oriented frames to obtain CSI, improving the utilization rate of packet information. In some embodiments, the current network condition may refer to the quality of a channel for communicating between the AP device and the client device before the current check time point *t*₀, which may include a packet loss condition for the channel. In some examples, the added s-PPDUs in the embodiment of FIG. 5 may adopt the HE-NDP frame format 300 illustrated in FIG. 3.

The current difference *Δp*₀ of CSI samples may be calculated according to equation (2) as follows:
${Δp}_{0} = {p}_{0} {Δt}_{total} - {p}_{pre} - {p}_{post}$ (2).

According to the current difference *Δp₀* of CSI samples, the number *p*_{*sens,*0} of s-PPDUs that should be added may be determined according to equation (3) as follows:
${p}_{sens , 0} = \left\{\begin{matrix}0 , Δ {p}_{0} \leq 0 \\ {Δp}_{0} + α , {Δp}_{0} > 0\end{matrix}\right.$ (3),
wherein *α* represents a compensation factor to be adjusted according the network condition, so as to compensate s-PPDUs that cannot be conducted channel measurement (due to e.g., packet loss), with *α* ≥ 0 and *α* is integer. Then, *p*_{*sens,*0} s-PPDUs may be added after the post checking window, and the AP device may obtain *Δp*₀ CSI samples. In some embodiments, the time interval among the added s-PPDUs may be determined based at least on the required quantity of CSI samples *p*₀, the number of CSI samples obtained within the previous checking window *pₚᵣₑ,* the number of CSI samples to be obtained within the post checking window *pₚₒₛₜ,* the post checking period *Δtₚₒₛₜ,* and a time window *Δt_{check}* between the current check time point *t*₀ and the next check time point *t*₁. By means of adjusting the time interval among the added s-PPDUs, the AP device may obtain *Δp*₀ CSI samples before the next check time point *t*₁. In some embodiments, the time window *Δt_{check}* = |*t*₁ - *t*₀| may be adjusted according to the requirements of the sensing task. By dynamic adjusting the number of s-PPDUs to be added at each check time point, the total number of CSI meeting the requirements of the sensing task can be guaranteed under an uncertain number of communication-oriented packets and uncertain network condition. When the number of CSI obtained from c-PPDUs is sufficient, no additional s-PPDU is added, and when the number of CSI obtained from c-PPDUs is insufficient, sufficient s-PPDUs are added.

The cycle for acquisition of CSI samples by the AP device may be irregular, potentially impacting the performance of sensing algorithms. For sensing algorithms that are not sensitive to this irregularity, no special treatment is needed. However, for algorithms that are sensitive to the sampling cycle, interpolation can be applied to the acquired CSI data to supplement the required CSI data at specific times. Furthermore, this problem can be mitigated by adjusting the parameters in the calculation for the insertion of sensing PPDUs, including for example *Δtₚᵣₑ, Δtₚₒₛₜ, Δt_{check}, α, p*₀, etc. For these parameters, the smaller the values of *Δtₚᵣₑ, Δtₚₒₛₜ* and *Δt_{check},* the more precise control of CSI acquisition, the higher the algorithm cost, and the more s-PPDUs that would be potentially added to the network; the larger the values of *α* and *p*₀, the more CSI data can be ensured to acquire, the more s-PPDUs that would be potentially added to the network. By adjusting the parameters in the scheme and the strategy of adding s-PPDUs, the requirements of acquiring CSI in different scenarios can be dynamically met, aligning the timing of the acquired CSI more closely with the optimal timing requirements specified by the algorithms.

The embodiment of FIG. 5 reduces the number of packets introduced additionally into the network for meeting requirements of sensing, thereby reducing air interface resources occupation as much as possible while meeting the requirements of sensing, and reducing the overall network overhead when a sensing task is present. Since the transmission of sensing PPDUs (s-PPDUs) also involves channel contention, and during busy communication periods within the network, the transmission of s-PPDUs may be delayed due to backoff mechanisms, which results in the loss of CSI acquisition for that specific time period. Consequently, this leads to uneven CSI acquisition cycles, impacting the performance of sensing algorithms. Therefore, as compared with the technical solutions of acquiring CSI totally depending on s-PPDUs, in some scenarios, especially scenarios that the communication tasks are busy, the proposed embodiment would better ensure the quantity of CSI that can be obtained.

As discussed with reference to FIG. 4, the obtained CSI data may be DL CSI data or UL CSI data. In the embodiment of FIG. 5, the CSI samples may also be DL CSI samples or UL CSI samples. For the examples of DL CSI samples, the AP device may transmit PPDUs to the STA device, who may compute CSI samples from the received PPDUs and send them back to the AP device. In such examples, the added s-PPDUs may be transmitted from the AP device to the STA device, the STA device may compute CSI samples from the received s-PPDUs and transmit the computed CSI samples to the AP device. Furthermore, in some examples, the *p*_{*sens,*0} s-PPDUs to be added may be transmitted after a queue to be transmitted from the AP device to the client device during the post checking window.

For the examples of UL CSI samples, the STA device may transmit PPDUs to the AP device, who may compute CSI samples from the received PPDUs directly. In such examples, the AP device may transmit to the STA device an adding indication that instructs the STA device to add *p*_{*sens,*0} s-PPDUs into a queue to be transmitted from the STA device to the AP device. In response to the adding indication, the STA device may transmit *p*_{*sens,*0} s-PPDUs to the AP device, who may receive s-PPDUs and compute a CSI sample from each of the received s-PPDUs. Furthermore, in some examples, the number of CSI samples to be obtained within the post checking window *pₚₒₛₜ* may be estimated based on the number of frames in the queue to be transmitted from the STA device to the AP device during the post checking window, and *p*_{*sens,*0} s-PPDUs may be added at the end of the queue to be transmitted from the STA device to the AP device.

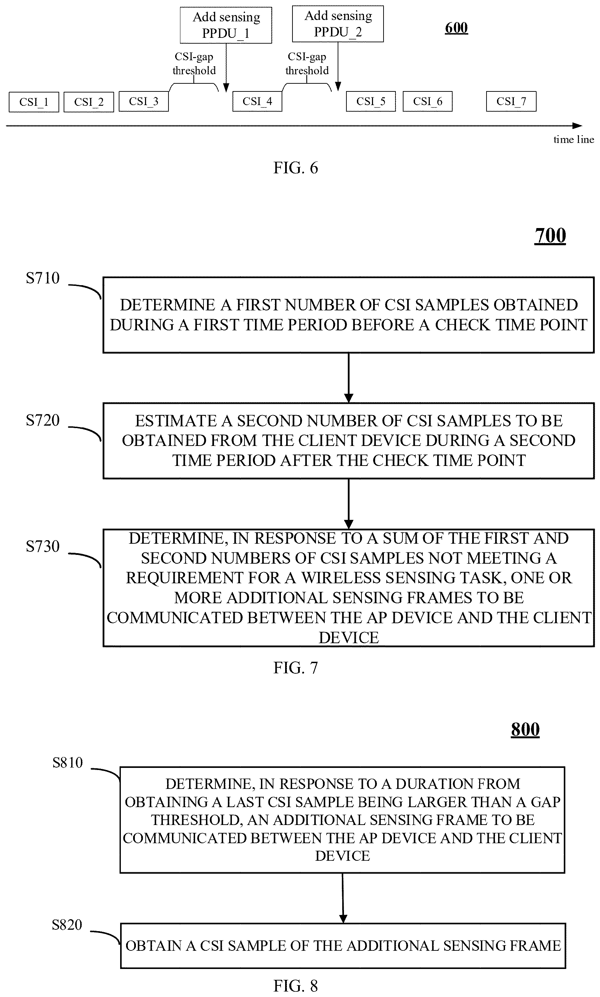

FIG. 6 shows an exemplary schematic diagram illustrating a further enhanced wireless sensing process 600 in accordance with an embodiment of the present disclosure.

The AP device may acquire CSI data from the received c-PPDUs and S-PPDUs, and record a duration from obtaining a last CSI sample, which may also be referred to as CSI-gap duration and recorded as *t_{gap}.* A variable gap threshold, which may also be referred to as CSI-gap threshold and recorded as *tₜₕᵣ,* may be predetermined. When *t_{gap} > tₜₕᵣ,* an s-PPDU is added to the transmitting queue of the STA device for channel measurement, while *t_{gap}* is reset to zero. If *t_{gap}* becomes larger than *tₜₕᵣ* again, another s-PPDU is added to the transmitting queue of the STA device for channel measurement, while *t_{gap}* is reset. If new CSI is acquired before *t_{gap}* becomes larger than *tₜₕᵣ, t_{gap}* is reset to zero and the next round of monitor is started.

As shown in FIG. 6, the AP device sequentially receives CSI_1 through CSI_3, with the time interval between receptions *t_{gap}* always being less than a specified threshold *tₜₕᵣ* and being reset twice. After receiving CSI_3, no new CSI was received within a time period *tₜₕᵣ,* s-PPDU_1 is added into the UL transmission queue. Consequently, within a time period less than *tₜₕᵣ,* CSI_4 is acquired via the UL packet from the STA device. After a period of *tₜₕᵣ,* s-PPDU_2 is added into the UL transmission queue, and thus within a time period less than the threshold, CSI_5 is acquired via the UL packet from the STA. Then, within a time period less than the UL packet from, the AP acquires CSI_6 and CSI_7 from the received c-PPDUs. Although the interval between acquiring CSI_6 and CSI_7 is slightly longer, it did not beyond the threshold *tₜₕᵣ,* hence no additional s-PPDU is added into the UL transmission queue. In some examples, the AP may transmit an adding indication that instructs the STA device to additionally transmit s-PPDU to the AP device. It should be noted that the embodiment in FIG. 6 introduces the technical solution with reference to the examples of UL CSI samples, similar as those discussed with reference to FIGS. 4-5, such a technical solution may be modified to applicable to the examples of DL CSI samples, the details of which are omitted for simplification.

In some embodiments, the performance of the scheme introduced in FIG. 6 may be changed by adjusting the threshold *tₜₕᵣ* according to the requirements of sensing task and network condition. The less the value of the threshold *tₜₕᵣ,* the more precise control of CSI acquisition, the higher the algorithm cost, and the more s-PPDUs that would be potentially added to the network. In some examples, the added s-PPDUs in the embodiment of FIG. 6 may adopt the HE-NDP frame format 300 illustrated in FIG. 3.

FIG. 7 shows a flowchart of a computer-implemented method 700 for wireless communication implemented at an access point (AP) device in accordance with an embodiment of the present disclosure.

The detailed description of method 700 can refer to the content described in the above with respect to FIGS. 1-5. For example, the method 700 can be executed in the architecture described with respect to FIGS. 1-6 and according to the interactions between an AP device and a STA device during Wi-Fi sensing using the enhanced sensing mechanism as described with respect to FIG. 5. In addition, each step of method 700 can be performed by one or more processing units, such as central processing unit (CPU) of the AP device.

With reference to FIG. 7, method 700 comprises steps S710-S730. At step S710, the AP device may determine a first number of channel state information (CSI) samples obtained during a first time period before a check time point. In accordance with embodiments of the present disclosure, the check time point is a time point predefined for checking whether the CSI to be obtained would meet the requirements of the current Wi-Fi sensing task. In accordance with embodiments of the present disclosure, the first time period may be referred to as previous checking period.

At step S720, the AP device may estimate a second number of CSI samples to be obtained during a second time period after the check time point. In accordance with embodiments of the present disclosure, the second time period may be referred to as post checking period.

At step S730, the AP device may determine, in response to a sum of the first and second numbers of CSI samples not meeting a requirement for a wireless sensing task, one or more additional sensing frames to be communicated between the AP device and the client device. The client device in the embodiments of FIG. 7 may also be referred to as the STA or the non-AP device.

In other words, the method described with respect to FIG. 7 estimates the number of CSI samples that shall be obtained during the second time period, so as to determine whether the number of CSI samples to be obtained before the next check time point is enough for the wireless sensing task. If the number of CSI samples to be obtained before the next check time point is not enough, additional sensing frames are added to meet the requirement for the wireless sensing task. This method utilizes CSI samples obtained from communication frames and obtains enough CSI data for the wireless sensing task with as few sensing PPDU as possible, reducing air interface overhead as much as possible, and reducing the overall network load when a wireless sensing task is present.

In accordance with some embodiments, the CSI samples obtained during the second time period may be computed from non-sensing dedicated frames communicating between the AP device and the client device. The non-sensing dedicated frames may be referred to as communication-oriented frames.

In accordance with some embodiments, the requirement of the wireless sensing task may include a required number of CSI samples for the wireless sensing task or an accuracy requirement for the wireless sensing task.

In accordance with some embodiments, the AP device may determine a time interval among a plurality of additional sensing frames based at least on a required number of CSI samples for the wireless sensing task, the sum of the first and second numbers of CSI samples, the second time period, and a time window between the check time point and a next check time point. For example, the number of the plurality of additional sensing frames can be determined by subtract the sum of the first and second numbers from the required number of CSI samples for the wireless sensing task, and the time period for transmitting the plurality of additional sensing frames equals to the subtraction of the time window and the second time period; then, the time interval can be calculated according to the time period for transmitting each of the plurality of additional sensing frames and the time period for transmitting the plurality of additional sensing frames. Furthermore, the AP device may communicate the plurality of additional sensing frames with the client device based on the determined time interval.

In accordance with some embodiments, the second number of CSI samples may be estimated based at least on the number and types of frames in a queue to be transmitted from the AP device to the client device during the second time period.

In accordance with some embodiments, the second number of CSI samples may be estimated based at least on quality of a channel for communicating between the AP device and the client device before the check time point, and the quality of the channel may include a packet loss condition for the channel.

In accordance with some embodiments, the number of the one or more additional sensing frames may be determined based at least on a required number of CSI samples for the wireless sensing task, the sum of the first and second numbers of CSI samples, and quality of a channel for communicating between the AP device and the client device before the check time point, and wherein the quality of the channel may include a packet loss condition for the channel.

In accordance with some embodiments, the AP device may transmit, to the client device, an adding indication that instructs the client device to add the one or more additional sensing frames into a queue to be transmitted from the client device to the AP device. The AP device may receive, from the client device, the one or more additional sensing frames. Moreover, the AP device may compute a CSI sample from each of the one or more received additional sensing frames.

In accordance with some embodiments, the second number of CSI samples may be estimated based on the number of frames in the queue to be transmitted from the client device to the AP device during the second time period, and the one or more additional sensing frames may be added at an end of the queue to be transmitted from the client device to the AP device.

In accordance with other embodiments, the AP device may transmit the one or more additional sensing frames to the client device, and receive, from the client device, respective CSI samples computed from the one or more additional sensing frames.

In accordance with some embodiments, the one or more additional sensing frames are transmitted after a queue to be transmitted from the AP device to the client device during the second time period.

In accordance with some embodiments, the first time period has the same size as the second time period.

In accordance with some embodiments, the one or more sensing frames are null data packets (NDPs).

FIG. 8 shows a flowchart of a computer-implemented method 800 for wireless communication implemented at an access point (AP) device in accordance with another embodiment of the present disclosure.

The detailed description of method 800 can refer to the content described in the above with respect to FIGS. 1-4 and 6. For example, the method 800 can be executed in the architecture described with respect to FIGS. 1-4 and 6 and according to the interactions between an AP device and a STA device during Wi-Fi sensing using the enhanced sensing mechanism as described with respect to FIG. 6. In addition, each step of method 800 can be performed by one or more processing units, such as central processing unit (CPU) of the AP device.

With reference to FIG. 8, method 800 comprises steps S810-S820. At step S810, the AP device may determine, in response to a duration from obtaining a last channel state information (CSI) sample being larger than a gap threshold, an additional sensing frame to be communicated between the AP device and the client device. The client device in the embodiments of FIG. 8 may also be referred to as the STA or the non-AP device.

At step S820, the AP device may obtain a CSI sample of the additional sensing frame.

In other words, the method described with respect to FIG. 8 adds an additional sensing frame as long as no CSI sample is received for a preset threshold. This method utilizes CSI samples obtained from communication frames, that is, the last CSI sample may be obtained from a communication frame and may also be obtained from a sensing-dedicated frame. This method obtains enough CSI data for the wireless sensing task and satisfies the requirement of periodical sensing, reducing air interface overhead, and reducing the overall network load when a wireless sensing task is present.

In accordance with some embodiments, the AP device may transmit, to the client device, an adding indication that instructs the client device to transmit the additional sensing frame to the AP device. Then, the AP device may receive, from the client device, the additional sensing frame. Moreover, the AP device may compute a CSI sample from the additional sensing frame.

In accordance with other embodiments, the AP device may transmit, to the client device, an additional sensing frame, and the CSI sample of the additional sensing frame may be computed by the client device.

In accordance with some embodiments, the additional sensing frame is a null data packet (NDP).

In accordance with some embodiments, CSI samples obtained by the AP device may include a CSI sample computed from a non-sensing dedicated frame communicating between the AP device and the client device. The non-sensing dedicated frames may be referred to as communication-oriented frames.

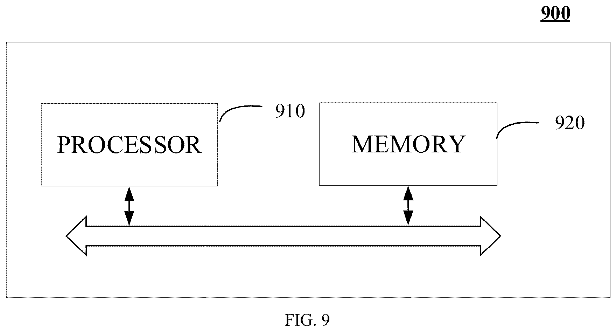

FIG. 9 is an exemplary block diagram illustrating a computing device in accordance with some embodiments of the present disclosure.

It should be noted that the computing device depicted in FIG. 9 can correspond to one or more of the AP, and the AP device as described in FIGS. 1-8, and can be used to perform the actions involved in the wireless sensing mechanism, for example, the method 700-800 as described above.

As shown in FIG. 9, the computing device 900 can comprise processor 910 and memory 920. The processor 910 is communicatively coupled with the memory and configured to perform the methods discussed above.

Examples of the processor 910 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The processor 910 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 920.

The memory 920 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 920 may reside in the processor 910, external to the processor 910, or distributed across multiple entities including the processor 910. The memory 920 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

In addition, according to another embodiment of the present disclosure, a computer program product for wireless communication is disclosed. As an example, the computer program product comprises a non-transitory computer readable storage medium having program instructions embodied therewith, and the program instructions are executable by a processor. When executed, the program instructions cause the processor to perform one or more of the above-described procedures, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Reference to an element in the singular is not intended to mean "one and only one" unless specifically so stated, but rather "one or more." Similarly, reference to an element in the plural is not intended to mean "more than one" unless specifically so stated or being contradictory with the description elsewhere, but rather "one or more." Terms such as "if," "when," and "while" should be interpreted to mean "under the condition that" rather than implying an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C.

It should be noted that the flowcharts and block diagrams in the attached drawings illustrate the possible architectures, functions and operations of the methods and apparatuses according to various embodiments of the present application. In this regard, each block in the flowchart or block diagram may represent a module, a program segment, or a part of code, which contains at least one executable instruction for implementing a specified logical function. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, may be implemented by a dedicated hardware-based system that performs specified functions or operations, or by a combination of dedicated hardware and computer instructions

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

Throughout the description and claims of this specification, the word "comprise" and variations of the word, such as "comprising" and "comprises," means "including but not limited to," and is not intended to exclude, for example, other additives, components, integers or steps. "Exemplary" means "an example of and is not intended to convey an indication of a preferred or ideal embodiment. "Such as" is not used in a restrictive sense, but for explanatory purposes.

It should be noted that the above-mentioned examples illustrate rather than limit the invention, and that those skilled in the art will be able to design many alternative embodiments without departing from the scope of the appended claims. Any reference signs in the claims shall not be construed so as to limit their scope.

## Claims

1. An access point (AP) device, comprising:
one or more processors; and
a memory coupled to at least one of the one or more processors, the memory having a set of computer program instructions stored therein, which, when executed by at least one of the one or more processors, cause the AP device to perform operations of:
determining a first number of channel state information (CSI) samples obtained during a first time period before a check time point;
estimating a second number of CSI samples to be obtained during a second time period after the check time point; and
determining, in response to a sum of the first and second numbers of CSI samples not meeting a requirement for a wireless sensing task, one or more additional sensing frames to be communicated between the AP device and the client device.

2. The AP device of claim 1, wherein the CSI samples obtained during the second time period are computed from non-sensing dedicated frames communicating between the AP device and the client device.

3. The AP device of claim 1 or 2, wherein the requirement of the wireless sensing task includes a required number of CSI samples for the wireless sensing task or an accuracy requirement for the wireless sensing task.

4. The AP device of any one of claims 1 to 3, wherein the set of computer program instructions, when executed by at least one of the one or more processors, cause the AP device to further perform operations of:
determining a time interval among a plurality of additional sensing frames based at least on a required number of CSI samples for the wireless sensing task, the sum of the first and second numbers of CSI samples, the second time period, and a time window between the check time point and a next check time point; and
communicating the plurality of additional sensing frames with the client device based on the determined time interval.

5. The AP device of any one of claims 1 to 4, wherein the second number of CSI samples is estimated based at least on the number and types of frames in a queue to be transmitted from the AP device to the client device during the second time period.

6. The AP device of any one of claims 1 to 5, wherein the second number of CSI samples is estimated based at least on quality of a channel for communicating between the AP device and the client device before the check time point, and the quality of the channel includes a packet loss condition for the channel.

7. The AP device of any one of claims 1 to 6, wherein the number of the one or more additional sensing frames is determined based at least on a required number of CSI samples for the wireless sensing task, the sum of the first and second numbers of CSI samples, and quality of a channel for communicating between the AP device and the client device before the check time point, and wherein the quality of the channel includes a packet loss condition for the channel.

8. The AP device of any one of claims 1 to 7, wherein the set of computer program instructions, when executed by at least one of the one or more processors, cause the AP device to further perform operations of:
transmitting, to the client device, an adding indication that instructs the client device to add the one or more additional sensing frames into a queue to be transmitted from the client device to the AP device;
receiving, from the client device, the one or more additional sensing frames; and
computing a CSI sample from each of the one or more received additional sensing frames.

9. The AP device of claim 8, wherein the second number of CSI samples is estimated based on the number of frames in the queue to be transmitted from the client device to the AP device during the second time period; and
wherein the one or more additional sensing frames are added at an end of the queue to be transmitted from the client device to the AP device.

10. The AP device of any one of claims 1 to 7, wherein the set of computer program instructions, when executed by at least one of the one or more processors, cause the AP device to further perform operations of:
transmitting the one or more additional sensing frames to the client device; and
receiving, from the client device, respective CSI samples computed from the one or more additional sensing frames.

11. The AP device of claim 10, wherein the one or more additional sensing frames are transmitted after a queue to be transmitted from the AP device to the client device during the second time period.

12. The AP device of any one of claims 1 to 11, wherein the first time period has the same size as the second time period.

13. The AP device of any one of claim 1, wherein the one or more sensing frames are null data packets (NDPs).

14. A method for wireless communication implemented at an access point (AP) device, the method comprising:
determining a first number of channel state information (CSI) samples obtained during a first time period before a check time point;
estimating a second number of CSI samples to be obtained from the client device during a second time period after the check time point; and
adding, in response to a sum of the first and second numbers of CSI samples being less than a requirement for a wireless sensing task, one or more sensing frames communicating between the AP device and the client device.

15. An access point (AP) device, comprising:
one or more processors; and
a memory coupled to at least one of the one or more processors, the memory having a set of computer program instructions stored therein, which, when executed by at least one of the one or more processors, cause the AP device to perform operations of:
determining, in response to a duration from obtaining a last channel state information (CSI) sample being larger than a gap threshold, an additional sensing frame to be communicated between the AP device and the client device; and
obtaining a CSI sample of the additional sensing frame.
